# EUROPEAN PATENT SPECIFICATION

(11) **EP 1 625 105 B1**
(45) Date of publication and mention of the grant of the patent: **19.11.2008**
(21) Application number: 04751301.5
(22) Date of filing: 03.05.2004
(51) Int. Cl.: C11C 1/00, C11C 3/00

(54) **METHOD OF MAKING ALKYL ESTERS USING PRESSURE**
VERFAHREN ZUR HERSTELLUNG VON ALKYLESTERN UNTER ANWENDUNG VON DRUCK
PROCEDE DE FABRICATION D'ESTERS D'ALKYLE PAR PRESSION

(30) Priority: 16.05.2003 US 471272 P
(43) Date of publication of application: 15.02.2006
(73) Proprietor: STEPAN COMPANY, Northfield, IL 60093 (US)
(72) Inventor: LUXEM, Franz, Josef, Palatine, IL 60074 (US); TROY, William, M., Woodridge, IL 60517 (US)
(74) Representative: Glas, Holger
(86) International application number: PCT/US2004/013851
(87) International publication number: WO 2004/103934

(56) References cited:
- WO-A-93/01263
- US-A- 4 695 411
- US-A- 5 525 126
- US-A- 5 578 090
- US-A1- 2003 083 514
- US-B1- 6 399 800
- KREUTZER U R: "MANUFACTURE OF FATTY ALCOHOLS BASED ON NATURAL FATS AND OILS" JOURNAL OF THE AMERICAN OIL CHEMISTS' SOCIETY, AOCS PRESS, CHAMPAIGN, IL, US, vol. 61, no. 2, 1 February 1984 (1984-02-01), pages 343-348, XP000673352 ISSN: 0003-021X

## Description

### BACKGROUND OF THE INVENTION

Alkylesters, or methylester specifically, such as biodiesel, are a clean-burning replacement for conventional petroleum-based diesel. Biodiesel may be made from natural, renewable sources such as new or used vegetable oils and animal fats. Biodiesel is fatty acid alkyl esters (typically being C₁₆ to C₁₈) and can generally be burned in combustion-ignition engines as a direct replacement for petroleum-based diesel. Aside from providing the benefit that biodiesel may be generated from renewable sources, biodiesel also provides the added benefit of decreased emissions from its combustion as compared to the combustion of petroleum-based diesel.

Alkylesters, in particular biodiesel, may be derived from the oils of the soybean or the rapeseed. The crude vegetable oil from these sources may be filtered, refined and subjected to several processing steps before the oil may be usable as biodiesel. Additionally, biodiesel may be derived from varying grades of vegetable oils. Such grades include virgin oil, yellow grease, used oils from food processing, or by-products from the edible oil refining process such as soap stock. Each of these sources has varying amounts of free fatty acids and/or glycerides -- i.e., mono-, di-, or tri-glycerides -- that may be processed into biodiesel.

Of these sources of vegetable oil, soap stock is generally considered the most cost effective source. Soap stock is derived from the crude oil extracted from the soybean or rapeseed. The crude oil of these seeds may be separated into two components: refined oil (which may then be further processed and converted into edible oil) and soap stock. The soap stock may then be acidulated with sulfuric acid to provide a composition having 70% free fatty acids that may be further processed into biodiesel.

One contemplated method of processing the free fatty acids from these various grades of vegetable oils is the direct transesterification of the free fatty acids in the presence of alkali to produce the fatty acid alkyl esters for use as biodiesel. Such an approach, however, causes the free fatty acids to precipitate as soap, creating an additional recovery step in the contemplated method.

To avoid the precipitation problem, a two-step method for processing the free fatty acids has been proposed. This method can be found in EP 07 708 813 and WO 02/28811, and generally consists of the steps of (1) acid catalyzed esterification of free fatty acids with methanol in the presence of sulfuric acid, and (2) neutralization of the acid catalyst followed by conventional base catalyzed transesterification. These steps can be described by the following reaction scheme. 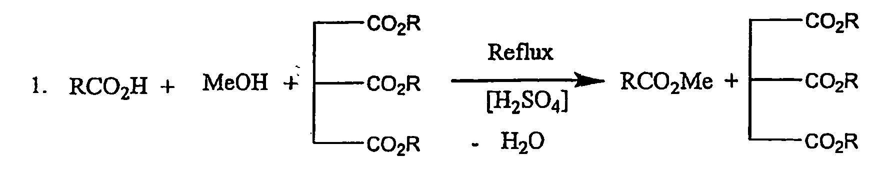 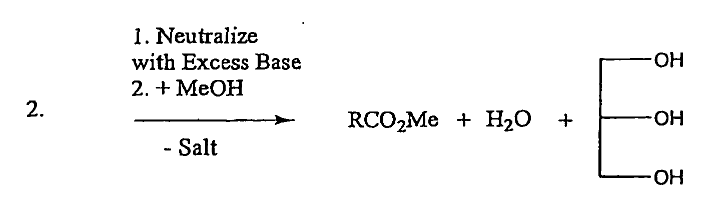 where each R may be the same or different and an aliphatic chain typically found in vegetable or animal oil sources, typically C₈ to C₂₂.

Even though transesterifications are both acid and base catalyzed, neutralization of the acid catalyst is necessary because acid catalyzed transesterifications typically exhibit slower kinetics than base catalyzed transesterifications, under comparable conditions. The disadvantages of two-step methods as disclosed in EP 07 08 813 and WO 02/28811 are the additional salt waste from neutralization, long cycle times, and a cumbersome recovery scheme of residual free fatty acids.

### BRIEF SUMMARY OF THE INVENTION

It is therefore an object of the present invention to provide a method of processing free fatty acids from a vegetable or animal oil source into alky esters in which the salt and aqueous waste is reduced or eliminated.

It is a further object of the present invention to provide a method of processing free fatty acids from a vegetable or animal oil source into alkyl esters in which the cycle times are reduced.

It is a further object of the present invention to provide a method of processing free fatty acids from a vegetable or animal oil source into alkyl esters in which the recovery scheme of residual free fatty acids is conveniently performed or the need for such recovery is eliminated.

It is a further object of the invention to provide a method capable of performing esterification and transesterification simultaneously in one step.

These and other advantages are accomplished by subjecting the vegetable or animal oil source to a single step method constituting a direct transformation of the free fatty acid and glycerides of the vegetable or animal oil source with methanol, as defined by the appended claims. The single step process does not involve a neutralization step thus simplifying the process. The single step method is generally described below. 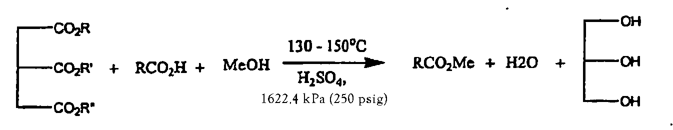 where each R may be the same or different and may be H or an aliphatic chain typically found in vegetable or animal oil sources, typically C₈ to C₂₂.

### DETAILED DESCRIPTION OF THE INVENTION

As noted above, the method of the present invention of processing a vegetable oil source can be represented by the following reaction scheme.

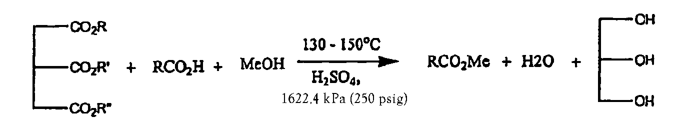

where each R may be the same or different and may be H or an aliphatic chain typically found in vegetable or animal oil sources, typically C₈ to C₂₂. The reaction scheme is undertaken at temperatures from 80°C to 200°C, preferably within the range of 120°C to 180°C, and most preferably within the range of 150°C to 170°C. The pressure under which the reaction scheme is run is 172,4 kPa (25 psia) to 3447 kPa (500 psia), preferably in the range of 689,5 kPa (100 psia) to 2068 kPa (300 psia).

Suitable vegetable oil sources for the present invention include, but are not limited to soy bean and rapeseed oil, and is preferably soap stock derived from rapeseed oil. Depending on the vegetable oil source utilized, the vegetable oil source comprises between 60 wt % to about 90 wt % of the total mixture to be reacted. Preferably, the vegetable oil source comprises between 65 wt % to 80 wt % of the total reaction mixture. Methanol is utilized in the reaction mixture in an amount between 10.0 wt % to 40.0 wt %, more preferably, between 20 wt% to 35 wt% of the total reaction mixture. The catalyst concentration ranges may be up to 1.0 wt%, preferably within the range of 0.1 to 0.5 wt% of the total reaction mixture. Preferably, the catalyst is an acid. More preferably, the catalyst is an inorganic mineral acid, such as, but not limited to, sulfuric acid.

Described differently, the methanol is utilized in an amount in excess of that needed for reaction. The methanol ranges from 1.0 molar equivalent to 5 molar equivalents, compared to the total moles of fatty acids and/or glycerides containing in the vegetable oil source. Preferably, the methanol is within the range of 1.5 molar equivalents to 3.0 molar equivalents. Additionally, the amount of catalyst may be described in terms of the amount of vegetable oil source as being up to 2.0% compared to the weight of the vegetable oil source, or more preferably, between 0.1 to 1.0%.

The reaction mixture has a starting acid value, at time 0, between 53 - 240, preferably 53 - 214, and more preferrably 107 - 187. The ending acid value, after the reaction has proceeded substantially to completion, is preferably less than 10.0, more preferably less than 6.0, and most preferably less than 2.5.

In some embodiments of the present technology, the by-products of reaction, such as water and glycerin, are removed. The by-products may be removed either continuously or by interrupting the reaction. Preferably, the reaction is quenched as quickly as possible by removing the heat source and cooling the reactor using the internal cooling coil and an external ice-water bath. Make-up catalyst (0.25 g) and methanol (5 g) are preferably added as necessary to the remaining phase, which is then poured back into a vessel to continue the reaction.

The present technology is characterized by substantial efficiency. Preferred embodiments of the present technology produce greater than 70.0 grams of biodiesel per 100 grams of starting reaction mixture. More preferably, the efficiency is greater than 80.0%, and most preferably, greater than 90.0%. Some embodiments of the present invention have exhibited greater than 95.0% efficiency.

Additionally, the present technology is characterized by fast reaction times. Preferably, the reaction will proceed to greater than 80.0% completion within 5.0 hours. More preferably, the reaction will proceed to greater than 80.0% completion within 2.5 hours. Some embodiments of the present invention can produce greater than 80.0 grams ofbiodiesel per 100 grams of vegetable oil source within 1.0 hours.

The above reaction scheme provides a method of making alky esters that provides the advantages of fast reaction times, moderate temperature and pressure requirements, and reduced overall cycle times. To demonstrate the effectiveness of the above reaction scheme of the present invention, acidulated soap stock samples were subjected to the reaction scheme and the acid value of the reaction products was determined as a function of time. The decreasing acid value demonstrated that the reaction scheme provides a satisfactory method of processing the free fatty acids of the acidulated soap stock into fatty acid alkyl esters for use, for example, as biodiesel. Further, to demonstrate that the products of the above reaction scheme compared favorably to a known biodiesel reference (obtained from the Stepan Company of Northfield, Illinois), ¹H-NMR of both the products of the various examples of the present invention were compared to the ¹H-NMR of the biodiesel reference. The comparison demonstrates that the products of the above reaction scheme provide products comparable to the biodiesel reference.

### Example 1

Example 1 sets forth systems in which the reaction scheme proceeded and where by-products were not removed. The acid values of the systems were measured as a function of time at two different temperatures (130°C and 150°C) to measure the extent of reaction. Even without the removal of the by-products, the reaction scheme of the present invention is demonstrated to provide an effective method of making biodiesel from various sources of vegetable oil.

Pressure reactions were generally carried out in a 300 ml 316 ss Parr autoclave with glass liner. The autoclave was equipped with a turbine agitator, thermocouple and cooling coil, as well as a sampling port with dip-tube. Charges were consistently kept to 100 g of acidulated soap stock, 35g of methanol and 0.25 g to 0.3 g of 98% sulfuric acid. The reactants and catalyst were charged and the autoclave was sealed and then flushed with nitrogen. Heat-up time was 30 minutes to 130° C and 45 minutes to 150°C. The maximum pressure at 150°C was measured to 1415,5 kPa (220 psig) Sampling was done from a sampling port. Approximately 1 - 2g of sample was retrieved from the reactor into a 10 ml vial. The vial was immediately quenched in ice-water for several minutes and analyzed for acid value (AV) after evaporating residual methanol in a stream of nitrogen.

The following table shows the acid value results for two runs where the by-products were not removed and demonstrate that the reaction scheme of the present invention effectively converts the free fatty acids. Table 1 demonstrates that the reaction at 150°C reaches equilibrium at 15 minutes while the reaction at 130°C reaches equilibrium at 60 minutes.

**TABLET 1 -- Acid values of Runs 1 and 2 over time.**

| Time (min.) | Run 1 -- 130°C | Run 2 -- 150°C |
|---|---|---|
| 0 | 112.2 | 112.2 |
| 5 | | 13.27 |
| 10 | | 11.33 |
| 15 | 47.19 | 9.43 |
| 30 | 20.16 | 10.54 |
| 60 | 11.14 | 9.3 |
| 90 | 7.76 | |
| 120 | 11.15 | 10.4 |
| 180 | 9.43 | 9.35 |

The products of Run 1 were further analyzed to confirm the transesterification of the glycerides in the acidulated soap stock. The analysis confirmed that the glycerides are transesterified simultaneously with the conversion of free fatty acids into fatty acid alkyl esters. The following table sets forth the ratio of the glyceride ¹H-NMR signal and the overall integration versus time. Table 2 shows the decreasing amount of glyceride content over time. Though the exact concentration of glycerides cannot be ascertained in this manner, it does show the relative decrease in concentration over time.

**TABLE 2 -- Glyceride ¹H-NMR integral as % of total integration for Run 1.**

| Time (min.) | Run 1 -- 130°C |
|---|---|
| 0 | 2.02 |
| 15 | 1.68 |
| 30 | 1.52 |
| 60 | 1.09 |
| 120 | 0.09 |

### Comparative Example

The comparative example was an acidulated soap stock subjected to the reaction scheme but under ambient pressure. The comparative example resulted in a complete conversion of the free fatty acids into fatty acid alkyl esters but the glycerides were not transesterified demonstrating the need for pressure above ambient.

90 g of acidulated soap stock together with 70 g of methanol and 0.5 g of sulfuric acid (98%) were charged into a 300 ml 3-neck round bottom flask. The flask was equipped with a mechanical stirrer, thermocouple and a reflux condenser atop a Soxhlett extractor filled with anhydrous calcium chloride. The mixture was heated by means of a heating mantle to reflux temperature (68 - 70°C). Methanol was continuously recycled through the calcium chloride bed to remove water. After 6 hrs of reflux the mixture was washed with a 10% sodium bicarbonate solution followed by twice washing with 5wt% (with regard to ester) water. The organic layer was dried under vacuum on a Rota-Evaporate at ∼ 60°C. A significant emulsification took place during washing, which eventually could only be dealt with by stripping the water in vacuo.

The comparative example of the esterification with methanol in the presence of sulfuric acid as the catalyst at ambient pressure lead to complete esterification of the free fatty acid after 6 Hrs (AV 0.5). However, with 1.25% (by ¹H-NMR determined as above) glycerides remaining, the advantage of using increased pressure becomes clear.

### Example 2

Example 2 sets forth systems in which the reaction scheme proceeded and where by-products (i.e., water and glycerin) were removed. The final measured acid values of the systems demonstrated that removal of the by-products facilitates the reaction scheme.

These runs were charged as outlined in Example 1. The removal of water and glycerin during pressure reactions could not be done from the reactor itself. Instead, the reaction was quenched as quickly as possible by removing the heart source and cooling the reactor using the internal cooling coil and an external ice-water bath. After cooling to 30°C or less the reactor was opened and the content was weighed and transferred to a 250 ml separatory funnel. After settling the water/glycerin layer was removed. Make-up catalyst (0.25 g) and methanol (5 g) were added as necessary to the remaining phase, which was then weighed and poured back into the Parr reactor, to continue the reaction.

Run 3 was carried out at 150°C for a total time of 2.6 hours. Run 3 resulted in a final acid value of 2.5 demonstrating the improved results over Runs 1 and 2 where the by-products were not removed. Even though this acid value of 2.5 vastly improves over those of Runs 1 and 2, a more complete reaction completion is desirable. It is believed that the acid value of 2.5 is due to the residual solubility of water in the product preventing the completion of the reaction.

Run 4 was formulated to demonstrate that the presence of a dehydrating agent for removal of the dissolved water in the product drives the reaction to completion. Run 4 resulted in an acid value as low at 0.5 and a final acid value of 0.8 demonstrating that the dissolved water indeed prevented the completion of the reaction.

For Run 4, the reactor was charged according to procedure 1 (0.125 g 98% sulfuric acid) and carried out at 150°C. After 30 min the reaction was quenched as quickly as possible and the reactor content was transferred to a flask and concentrated at 50°C to a net weight of 104 g, under vacuum. The acid value at this point was determined to be 19.6. The concentrate was returned to the reactor with 35 g of methanol and 5.0 g of anhydrous sodium sulfate. The reaction was continued at 150°C for 1 hr, after which the reaction was quenched and concentrated as before. The acid value at this point was 2.0. This procedure was repeated twice more to a final acid value of 0.54. The product was then washed twice with DI water and dried under vacuum for 1 hour at 60°C. The final acid value was determine to 0.8.

Run 5 was run at 180°C and demonstrated that the higher temperature of 180°C did improve the reaction time over Runs 1 and 2.

For Run 5, the reactor was charged according to procedure 1, with 100.0 g soap stock, 35.0 g methanol and 0.25 g sulfuric acid. The autoclave was heated to 180°C within 45 minutes and held at this temperature for 30 minutes, before being quenched. The content was transferred to a separatory funnel and 14.29 g of bottom phase were removed. The remaining amount was brought back to the autoclave and heating at 180°C continued for 60 minutes. The reaction was cooled again and a total of 10.83 g was removed after separation. The remaining phase was washed twice with 25 g of water, and finally dried under vacuum at 60°C. The resulting acid value was 6.3.

The following table summarizes the conditions and results for Runs 3, 4, and 5.

**Table 3: Reaction summary for Runs 3, 4, and 5.**

| | Temp | Total | Soap | Methanol | 98% | Final | Glycerin | Yield |
|---|---|---|---|---|---|---|---|---|
| | (°C) | Time | Stock | [g] | Sulfuric | AV | Phase | (based |
| | | [hrs] | [g] | | Acid | [meq/g] | [g] | on g |
| | | | | | [g] | | | soap |
| | | | | | | | | stock) |
| | | | | | | | | [g] |
| Run 3 | 150 | 2.6 | 100.0 | 35.0 | 0.25 | 2.5 | 23.73 | 89.2 |
| Run 4 | 150 | 4.5 | 100.1 | 35.0 | 0.125 | 0.8 | n.d. | 92.5 |
| Run 5 | 180 | 1.5 | 100.0 | 35.0 | 0.25 | 6.3 | 25.12 | 90.6 |

| | | | | | | | | |
|---|---|---|---|---|---|---|---|---|
| (n.d. = not determined) | | | | | | | | |

Runs 4 and 5, respectively, did not reveal any side reactions taking place under the conditions of the reaction scheme, indicating that the reaction scheme of the present invention may be the subject of a continuous process. Additionally, it was confirmed that the higher reaction temperature of Run 5 does not have a negative effect as far as decomposition is concerned.

While particular elements, embodiments and applications of the present invention have been shown and described, it will be understood that the invention is not limited thereto since modifications may be made by those skilled in the art, particularly in light of the foregoing teachings. Therefore, it is understood that the embodiments described above are merely for illustrative purposes and are not intended to limit the scope of the invention.

## Claims

1. A method of making alkyl esters comprising the following steps:
(a) forming a reaction mixture having an acid value of between 53 to 240 comprising:
(i) a vegetable or animal oil source in an amount of at least 60 wt% of the total weight of the reaction mixture, wherein the vegetable or animal oil source comprises a mixture of free fatty acids and glycerides;
(ii) methanol in an amount between 10 wt% to 40 wt% of the total weight of a reaction mixture;
(iii) a catalytic acid in an amount between 0.05 wt% to 2 wt% compared to the weight of the vegetable or animal oil source;
(b) heating the reaction mixture to a temperature of between 80°C to 200°C.
(c) maintaining a pressure of 172.4 kPa (25 psia) to 3447 kPa (500 psia) for the heated reaction mixture;
(d) reacting the methanol and the free fatty acids or glycerides to produce a reaction product comprising fatty acid alkyl esters; and
(e) recovering the fatty acid alkyl esters.

2. The method of claim 1, wherein the pressure is maintained at between 689.5 kPa (100 psia) to about 2068 kPa (300 psia).

3. The method of claim 2, wherein the reaction mixture is heated to a temperature of between 120°C to 180°C.

4. The method of claim 1, further comprising a step of removing by-products of reaction during processing.

5. The method of claim 1, wherein greater than 85.0 grams of alkyl esters per 100 grams of vegetable or animal oil source are produced.

6. The method of claim 1, wherein the reaction product has an acid value less than 10.0.

7. The method of claim 1, wherein the reaction product has an acid value less than 2.5.

8. The method of claim 1, further comprising a step of removing dissolved water from the reaction product and then subjecting it to further reaction.

9. The method of claim 1, wherein the reaction time is less than 5 hours and preferably less than 2.5 hours to proceed to greater than 80.0 % completion.

## Patentansprüche

1. Ein Verfahren zur Herstellung von Alkylestern umfassend die folgenden Schritte:
(a) Bilden einer Reaktionsmischung, die eine Säurezahl von 53 bis 240 aufweist, umfassend:
(i) eine pflanzliche oder tierische Ölquelle in einer Menge von mindestens 60 Gew.-% bezogen auf das Gesamtgewicht der Reaktionsmischung, wobei die pflanzliche oder tierische Ölquelle eine Mischung aus freien Fettsäuren und Glyceriden umfasst;
(ii) Methanol in einer Menge zwischen 10 Gew.-% und 40 Gew.-% bezogen auf das Gesamtgewicht einer Reaktionsmischung;
(iii) eine katalytische Säure in einer Menge zwischen 0,05 Gew.-% und 2 Gew.-% bezogen auf das Gewicht der pflanzlichen oder tierischen Ölquelle;
(b) Erhitzen der Reaktionsmischung auf eine Temperatur zwischen 80°C und 200 °C.
(c) Aufrechterhalten eines Druckes von 172,4 kPa (25 psia) bis 3447 kPa (500 psia) über der erhitzten Reaktionsmischung;
(d) Reagieren des Methanols mit den freien Fettsäuren oder Glyceriden um eine Fettsäurealkylester umfassende Reaktionsmischung herzustellen,; und
(e) Gewinnen der Fettsäurealkylester.

2. Das Verfahren nach Anspruch 1, wobei der Druck zwischen 689,5 kPa (100 psia) und 2068 kPa (300 psia) aufrecht erhalten wird.

3. Das Verfahren nach Anspruch 2, wobei die Reaktionsmischung auf eine Temperatur zwischen 120 °C und 180 °C erhitzt wird.

4. Das Verfahren nach Anspruch 1, weiter umfassend einen Schritt des Entfernens von Reaktionsnebenprodukten während der Verarbeitung.

5. Das Verfahren nach Anspruch 1, wobei mehr als 85,0 Gramm Alkylester pro 100 Gramm pflanzlicher oder tierischer Ölquelle hergestellt werden.

6. Das Verfahren nach Anspruch 1, wobei das Reaktionsprodukt eine Säurezahl von weniger als 10,0 aufweist.

7. Das Verfahren nach Anspruch 1, wobei das Reaktionsprodukt eine Säurezahl von weniger als 2,5 aufweist.

8. Das Verfahren nach Anspruch 1, weiter umfassend einen Schritt des Entfernens von gelöstem Wasser aus dem Reaktionsprodukt und anschließendes Unterziehen der weiteren Reaktion.

9. Das Verfahren nach Anspruch 1, wobei die Reaktionszeit geringer ist als 5 Stunden und vorzugsweise geringer als 2,5 Stunden um eine Vervollständigung von mehr als 80,0 % zu erzielen.

## Revendications

1. Procédé de fabrication d'esters alkyliques comprenant les étapes suivantes consistant à:
(a) former un mélange réactionnel ayant un indice d'acide compris entre 53 et 240 comprenant :
(i) une source d'huile végétale ou animale en une quantité d'au moins 60 % en poids du poids total du mélange réactionnel, où la source d'huile végétale ou animale comprend un mélange d'acides gras libres et de glycérides ;
(ii) du méthanol en une quantité comprise entre 10 % en poids et 40 % en poids du poids total d'un mélange réactionnel ;
(iii) un acide catalytique en une quantité comprise entre 0,05 % en poids et 2 % en poids comparé au poids de la source d'huile végétale ou animale ;
(b) chauffer le mélange réactionnel à une température comprise entre 80°C et 200°C ;
(c) maintenir une pression de 172,4 kPa (25 psia) à 3 447 kPa (500 psia) pour le mélange réactionnel chauffé ;
(d) faire réagir le méthanol et les acides gras libres ou les glycérides pour produire un produit de réaction comprenant des esters alkyliques d'acide gras ; et
(e) récupérer les esters alkyliques d'acide gras.

2. Procédé selon la revendication 1, dans lequel la pression est maintenue à une valeur comprise entre 689,5 kPa (100 psia) et environ 2 068 kPa (300 psia).

3. Procédé selon la revendication 2, dans lequel le mélange réactionnel est chauffé à une température comprise entre 120°C et 180°C.

4. Procédé selon la revendication 1, comprenant en outre une étape consistant à éliminer les produits secondaires de la réaction pendant la mise en oeuvre.

5. Procédé selon la revendication 1, dans lequel plus de 85,0 grammes d'esters alkyliques pour 100 grammes de source d'huile végétale ou animale sont produits.

6. Procédé selon la revendication 1, dans lequel le produit de réaction a un indice d'acide inférieur à 10,0.

7. Procédé selon la revendication 1, dans lequel le produit de réaction a un indice d'acide inférieur à 2,5.

8. Procédé selon la revendication 1, comprenant en outre une étape consistant à éliminer l'eau dissoute du produit de réaction puis à le soumettre à une autre réaction.

9. Procédé selon la revendication 1, dans lequel la durée de réaction est inférieure à 5 heures et de préférence inférieure à 2,5 heures pour obtenir un rendement supérieur à 80,0 %.
